Europäisches Patentamt

European Patent Office

Office européen des brevets

(11) Publication number: **0 499 178 A1**

# EUROPEAN PATENT APPLICATION

(21) Application number: **92102194.5**

(22) Date of filing: **10.02.92**

(51) Int. Cl.⁵: **G06F 1/32**

(30) Priority: **08.02.91 JP 39196/91**

(43) Date of publication of application:
**19.08.92 Bulletin 92/34**

(84) Designated Contracting States:
**CH ES FR GB LI NL**

(71) Applicant: **NEC CORPORATION**
**7-1, Shiba 5-chome Minato-ku**
**Tokyo 108-01(JP)**

(72) Inventor: **Ide, Motoki, c/o NEC Corporation**
**7-1, Shiba 5-chome, Minato-ku**
**Tokyo(JP)**
Inventor: **Kai, Toshiharu, c/o NEC Corporation**
**7-1, Shiba 5-chome, Minato-ku**
**Tokyo(JP)**

(74) Representative: **Vossius & Partner**
**Siebertstrasse 4 P.O. Box 86 07 67**
**W-8000 München 86(DE)**

(54) **System clock switching mechanism for microprocessor.**

(57) This system clock switching mechanism for a microprocessor has system clock specification data for the tasks in holding means such as a task control block (TDB) (60). If there is no task in READY or RUN status, the clock switching control unit (40) switches the system clock to the low speed clock. When the task is put in RUN status, the system clock specification data for that task in TDB (60) is referred to so that the system clock is switched to the clock as specified.

FIG.1

The present invention relates to a system clock switching mechanism used in a microprocessor which operates with a plurality of system clocks (CPU system clocks) at different speeds.

## DESCRIPTION OF THE PRIOR ART

Some conventional microprocessors are provided with two system clocks switched by a real time operating system: a system clock of low clock frequency, i.e. a clock at a low speed (hereinafter referred to as a low speed clock) and a system clock of high clock frequency, i.e. a clock at a high speed (hereinafter referred to as high speed clock).

A conventional system clock switching mechanism using a real time operating system for such microprocessors is briefly described below. In the conventional system clock switching mechanism, the system clock is switched from high speed to low speed if no task (user task) is in READY or RUN status. If any task is in READY or RUN status, the system clock is switched from low speed to high speed when the applicable task is put in RUN status.

If no task is in READY or RUN status and the microprocessor is in HALT status, the system clock is switched to low speed. This reduces the power consumption and noise (so-called CPU noise) caused by the microprocessor. If a task is put in READY status (by hardware interruption, for example), with the microprocessor in HALT status, the system clock is switched to the high speed clock at the moment that task enters RUN status, which enables high speed processing of the task.

The system clock switching mechanism of conventional microprocessors as described above realizes low power consumption at the microprocessor and reduced CPU noise by switching the system clock to the low speed clock when no task is in READY or RUN status and switching it to the high speed clock at the moment a task enters RUN status. However, the effect of power consumption reduction and CPU noise lowering as described above is limited because the system clock switches to the high speed clock every time when a task is put in RUN status. Not all of the tasks executed on the microprocessor need to be processed with the high speed clock. Some of the tasks can be processed with the low speed clock without causing any problem. If the tasks which can be processed at a low speed are processed with the low speed clock, it will achieve further reduction of power consumption and CPU noise at the microprocessor.

## SUMMARY OF THE INVENTION

The object of this invention is to provide a system clock switching mechanism where the system clock can be specified for each task so that the power consumption and CPU noise while a task is run by the microprocessor can be reduced.

According to a preferred embodiment of the present invention to attain this object, a system clock switching mechanism is provided with a clock generating means to supply a plurality of system clocks at different speeds to the microprocessor, a holding means to set and hold the system clock specification data for each task executed by the microprocessor, and a clock switching means to switch the system clock supplied by the clock generating means. The clock switching means switches the system clock to the clock specified for each task according to the system clock specification data held by the holding means.

According to a preferred embodiment, the clock switching means switches to the lowest speed system clock when no task is in READY or RUN status, and switches to the system clock as specified when such a task exists according to the system clock specification data held by the holding means. According to a further preferred embodiment, the system clocks provided by the clock generating means are two: low speed clock and high speed clock.

The system clock switching mechanism for a microprocessor according to another preferred embodiment of this invention is provided with a clock generating means to supply a plurality of system clocks at different speeds to the microprocessor, a holding means to set and hold the system clock specification data for each task executed by the microprocessor, a scheduler means to judge whether there is any task in READY or RUN status and refer to the system clock specification data held by the holding means for each task, and a clock switching means to switch the system clock supplied by the clock generating means. When the scheduler means judges that there is no task in READY or RUN status, the clock switching means switches to the lowest speed system clock, and when the scheduler means judges that there is any task in READY or RUN status, it refers to the system clock specification data held by the holding means and instruct the clock switching means to switch to the system clock given by the system clock specification data. The clock switching means switches between the system clocks according to the switching instruction from the scheduler means.

Other objects and effects of the present invention will be clarified by the detailed description below.

## BRIEF DESCRIPTION OF THE DRAWINGS

Fig. 1 is a block diagram to show the entire configuration of a microprocessor system according to a first embodiment of the present invention.

Fig. 2a, Fig. 2b is a block diagram to show the function of the real time operating system to realize the system clock switching mechanism of this invention, also serving as a flowchart to show its operation.

## DESCRIPTION OF THE PREFERRED EMBODIMENT

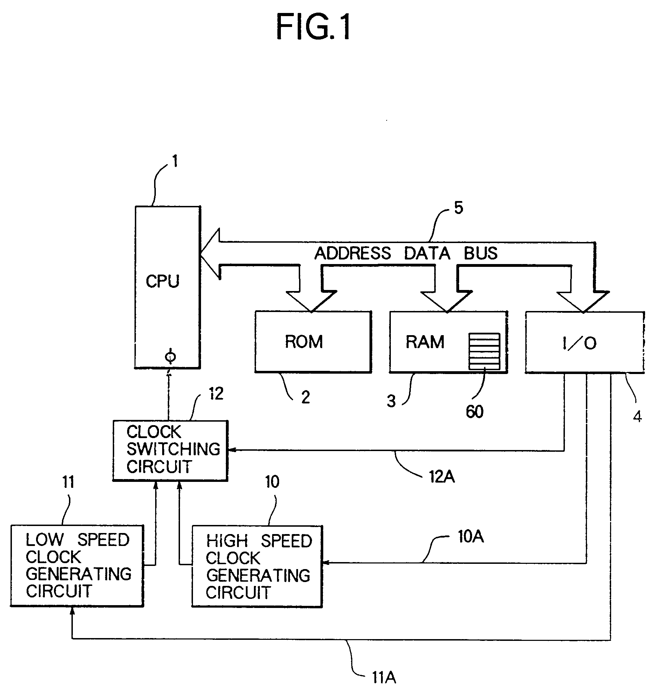

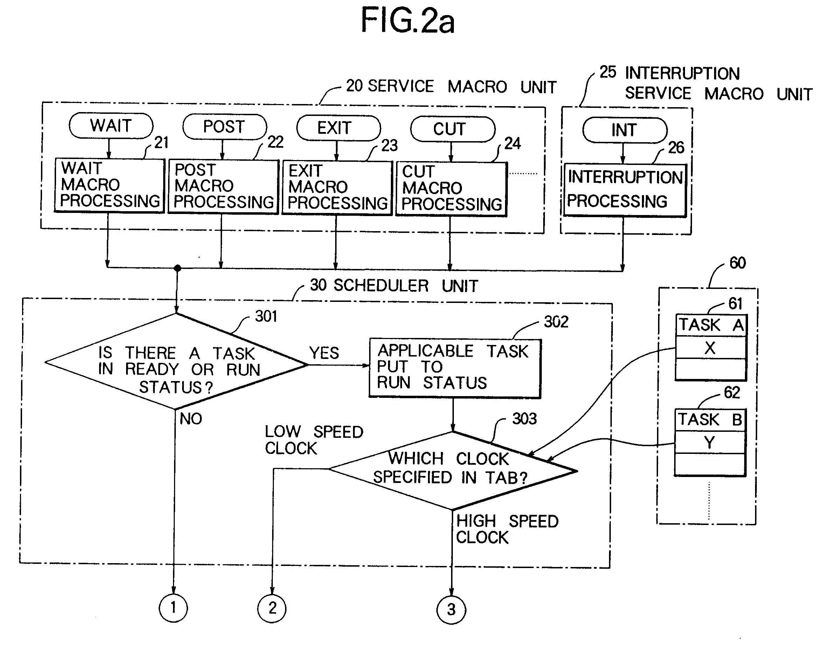

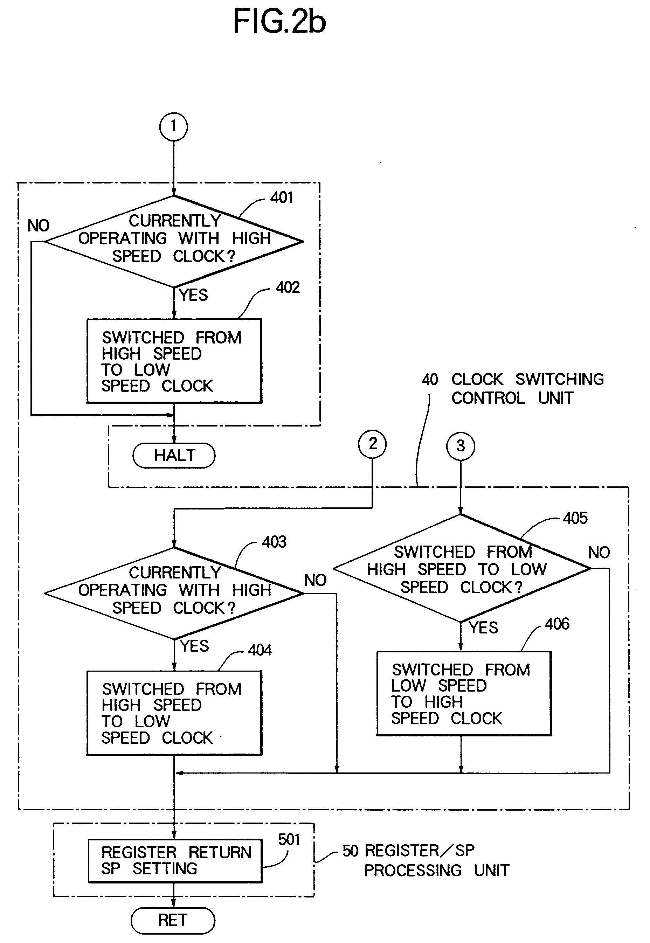

Referring to Figs. 1 and 2a, 2b a preferred embodiment of the present invention is described now. Fig. 1 shows the configuration of a microprocessor system with the system clock switching mechanism according to the first embodiment of the present invention.

In Fig. 1, a microprocessor system according to this embodiment comprises a microprocessor (CPU) 1 and a ROM 2, a RAM 3, and an I/O interface 4 connected to the microprocessor 1 via an address/data bus 5 and a high speed clock generating circuit 10, a low speed clock generating circuit 11, and a clock switching circuit 12.

The ROM 2 accommodates a real time operating system and a service macro unit, an interruption service macro unit, and a register return/stack pointer setting unit as programs in advance. The RAM 3 is a memory area to store user programs and data. In this embodiment, a task control table (TDB) 60 as described later is set in the RAM 3.

The high speed clock generating circuit 10 and the low speed clock generating circuit 11 serve for generating system clocks at high speed and low speed respectively for operation of the microprocessor 1. They are connected to the I/O interface 4 via a high speed clock control line 10A and a low speed clock control line 11A. The high speed clock generating circuit 10 and the low speed clock generating circuit 11 can generate and stop clocks according to the control signal from the microprocessor 1 sent via the high speed clock control line 10A and the low speed clock control line 11A. However, clocks are not necessarily controlled for generation and stop. They can be left to continue generation all the time.

The clock switching circuit 12 is capable of supplying the system clock to the system clock 1 in the microprocessor 1 by switching between the high speed clock generating circuit 10 and the low speed clock generating circuit 11. It is connected to the I/O interface 4 via a clock input switching line 12A. Switching operation is controlled by the control signal sent from the clock switching control unit (described later) via this clock input switching line 12A. Switching between the high speed clock generating circuit 10 and the low speed clock generating circuit 11 is made at a rise of the clock or other timing.

Next, referring to the functional block diagram and flowchart of Fig. 2a, 2b this system clock switching mechanism is described. Fig. 2a, 2b is a block diagram to show the function of the real time operating system to achieve this system clock switching mechanism and at the same time serves as a flowchart to show its function. In Fig. 2a, 2b the numeral 20 indicates a service macro unit, 25 an interruption service macro unit, 50 a register/stack pointer (SP) processing unit for register return and stack pointer setting. The service macro unit 20 controls macro operations such as WAIT macro processing 21, POST macro processing 22, EXIT macro processing 23 and CUT macro processing 24. The interruption service macro unit 25 controls interruption processing 26, which may be caused by hardware interruption, for example.

The numeral 30 indicates a scheduler unit and the numeral 40 indicates a clock switching control unit. The scheduler unit 30 controls tasks executed by the microprocessor 1. The clock switching control unit 40 controls the clock switching circuit 12 as described above corresponding to the task status so as to switch the system clock properly.

The service macro unit 20, the interruption service macro unit 21, the scheduler unit 30, the clock switching control unit 40, and the register/SP processing unit 50 are all embodied in the real time operating system and stored in the ROM 2 of Fig. 1 in advance.

The TDB 60 is a table to specify the speed of the system clock for execution of a task (user task) by the microprocessor 1 as a data (system clock specification data) and is set in a part of the RAM 3 as described above.

This TDB 60 comprises a plurality of tables 61, 62 ... corresponding to a plurality of tasks. For example, the table 61 stores the system clock specification data for task A and the table 62 stores the system clock specification data for task B. All system clock specification data for the tasks are similarly stored.

Here, the table 61 for task A stores X, which indicates the high speed clock, as the system clock specification data. The table 62 for task B stores Y, which indicates the low speed clock, as the system clock specification data.

The system clock switching operation will be described below.

The scheduler unit 30 judges whether there is a task in READY or RUN status (301). If such a task is not found, the scheduler unit 30 requests the clock switching control unit 40 to switch to the low speed clock. In response to this, the clock switching control unit 40 judges whether the microprocessor 1 is currently operating with the high speed clock or not (401). If it is operating with the high speed clock, the clock switching control unit 40 sends the switching signal to the clock switching circuit 12 to switch the high speed clock to the low speed clock. This causes the system clock to the microprocessor 1 to be switched to the low speed clock at the clock switching circuit 12. Then, the microprocessor 1 is put in HALT status.

If the scheduler unit 30 judges that there is such a task in Step 301, it makes the tasks to be put in RUN status (if any) enter RUN status (302). Then, it refers to the TDB 60 to look for the system clock specification data corresponding to the tasks in RUN status (303). For task A, the system clock specification data X in the table 61 of the TDB 60 is obtained, and for task B, the system clock specification data Y in the table 62 of the TDB 60 is obtained. As a result of reference to the TDB 60, if the low speed clock is specified for that task (task B, for example), the scheduler unit 30 requests the clock switching control unit 40 to switch to the low speed clock, and if the high speed clock is specified for that task (task A, for example), it requests the clock switching control unit 40 to switch to the high speed clock.

The clock switching control unit 40, upon request by the scheduler unit 30 to switch to the low speed clock, judges whether the microprocessor 1 is currently operating with the high speed clock or not (403). If it operates with the high speed clock, the clock switching control unit 40 instructs the clock switching circuit 12 to switch the system clock from the high speed clock to the low speed clock (404). This makes the system clock in the microprocessor 1 switched to the low speed clock. When Step 404 terminates or when it is judged that the microprocessor is not operating with the high speed clock currently, the register/SP processing unit 50 returns the register and performs other processing (501) for returning.

When the scheduler unit 30 requests switching to the high speed clock, the clock switching control unit 40 judges whether the microprocessor 1 is currently operating with the low speed clock or not (405). If it is operating with the low speed clock, the clock switching control unit 40 instructs the clock switching circuit 12 to switch the system clock from the low speed clock to the high speed clock (406). This makes the system clock in the microprocessor 1 switched to the high speed clock. When Step 406 terminates or when the microprocessor is not operating with the low speed clock, the register/SP processing unit 50 returns and performs other processing for returning.

As obviously learned from the description above, when no task is in READY or RUN status and the microprocessor 1 is in HALT status, Steps 401 and 402 at the clock switching control unit 40 switch the system clock to the low speed clock.

This reduces the power consumption by the microprocessor 1 and lowers the CPU noise it generates.

Assume now that the interruption service macro unit 25 in the real time operating system is executed by hardware interruption, for example, when the microprocessor is in HALT status and a POST macro which cancels WAIT status of task A is issued. In this case, task A enters READY status and then is put to RUN status at Step 302 by the scheduler unit 30. At Step 303, the scheduler unit 30 refers to the system clock specification data X in the table 61 of the TDB 60 and requests the clock switching control unit 40 to switch to the high speed clock, and the clock switching control unit 40 proceeds to Step 406 to switch the system clock to the high speed clock, and then to pass the control to task A.

If, on the contrary, task B is in READY status when the microprocessor is in HALT status and the control is to be passed to task B, the system clock specification data Y in the table 62 of the TDB 60 is referred to and the scheduler unit 30 requests the clock switching control unit 40 to switch to the low speed clock. The clock switching control unit 40, since the microprocessor is currently operating with the low speed clock, jumps from Step 404 to Step 501. Then, task B is executed with the low speed clock. Of course, if the microprocessor is operating with the high speed clock before the control is passed to task B, the clock switching control unit 40 performs Step 404 to switch to the low speed clock.

As described above, the system clock switching mechanism of the present invention enables specification of system clock for each task by the system clock specification data held by the memory means such as TDB 60. Therefore, by setting the system clock specification data to instruct the use of low speed clock for the tasks which can be properly processed at a low speed, those tasks are processed with low speed clock. This promotes reduction of power consumption and CPU noise at the microprocessor

While the invention has been described in its preferred embodiments, it is to be understood that various modifications may be made therein. For example, there are two system clocks for high speed and low speed in the above embodiment, but switching can be made for increased number of degrees. For example, it is possible to provide three degrees including high speed, medium speed and low speed clocks. Naturally, for increased system clocks, the TDB 60 will have correspondingly increased system clock specification data. It is intended to cover in the appended claims all such modifications as fall within the true spirit and scope of the invention.

## Claims

1. A system clock switching mechanism for a microprocessor comprising
a clock generating means (10,11) for supplying a plurality of system clocks at different speeds to the microprocessor (1),
a holding means (60) for setting and holding a system clock specification data for each task executed by said microprocessor (1), and
a clock switching means (40) for switching the system clock supplied by said clock generating means (10,11); said clock switching means (40) switching the system clock to the one specified for the task according to the system clock specification data held by said holding means (60).

2. A system clock switching mechanism for a microprocessor of Claim 1 wherein
said clock switching means (40) switches the system clock to the lowest speed clock when no task is in READY or RUN status, and when any task is in such a status, to the system clock specified for that task according to the system clock specification data held by said holding means (60).

3. A system clock switching mechanism for a microprocessor of Claim 1 or 2, wherein the clock generating means (10,11) provides two system clocks: one at a low speed and the other at a high speed.

4. A system clock switching mechanism for a microprocessor comprising
a clock generating means (10,11) for supplying a plurality of system clocks at different speeds to the microprocessor,
a holding means (60) for setting and holding a system clock specification data for each task executed by said microprocessor (1),
a scheduler means (30) for judging whether there is a task in READY or RUN status and refer to the system clock specification data in said holding means (60) for each task, and
a clock switching means (40) for switching the system clock supplied from said clock generating means (10,11); said scheduler means (30) causing said clock switching means (40) to switch the system clock to the lowest speed clock when it judges that there is no task in READY or RUN status and instructing said clock switching means (40) to switch the system clock to the clock given by the system clock specification data, and said clock switching means (40) switching the system clock according to the switching instruction from said scheduler means (30).

5. A system clock switching mechanism for a microprocessor of Claim 4 wherein the clock generating means (10,11) provides two system clocks: one at a low speed and the other at a high speed.

# FIG.1

# FIG.2a

EP 0 499 178 A1

# FIG.2b

①

401
CURRENTLY OPERATING WITH HIGH SPEED CLOCK?
NO
YES

402
SWITCHED FROM HIGH SPEED TO LOW SPEED CLOCK

HALT

②            ③

40 CLOCK SWITCHING CONTROL UNIT

403
CURRENTLY OPERATING WITH HIGH SPEED CLOCK?
NO
YES

404
SWITCHED FROM HIGH SPEED TO LOW SPEED CLOCK

405
SWITCHED FROM HIGH SPEED TO LOW SPEED CLOCK?
NO
YES

406
SWITCHED FROM LOW SPEED TO HIGH SPEED CLOCK

501
REGISTER RETURN SP SETTING

50 REGISTER/SP PROCESSING UNIT

RET

European Patent Office

# EUROPEAN SEARCH REPORT

Application Number

EP 92 10 2194

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 256 594 (N.V. PHILIPS' GLOEILAMPENFABRIEKEN) <br> * page 2, line 47 - line 48 * <br> * page 3, line 27 - line 41 * <br> * page 3, line 46 - page 4, line 25 * <br> * claim 1; figures 1-2 * <br> --- | 1-5 | G06F1/32 |
| X | WO-A-8 600 432 (AMERICAN TELEPHONE & TELEGRAPH COMPANY) <br> * page 1, line 8 - line 24 * <br> * page 5, line 26 - line 35 * <br> * page 7, line 18 - page 8, line 7 * <br> * figure 6 * <br> --- | 1-5 | |
| X | WO-A-9 100 565 (HAND HELD PRODUCTS INC.) <br> * page 4, line 22 - page 5, line 2 * <br> * page 11, line 18 - page 12, line 12 * <br> * abstract * <br> * figures 1,2B * | 1-5 | |
| | ----- | | TECHNICAL FIELDS SEARCHED (Int. Cl.5) <br><br> G06F |

The present search report has been drawn up for all claims

| Place of search | Date of completion of the search | Examiner |
|---|---|---|
| THE HAGUE | 22 MAY 1992 | NGUYEN XUAN HIEP C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                
& : member of the same patent family, corresponding document

EPO FORM 1503 03.82 (P0401)